# EUROPÄISCHE PATENTANMELDUNG

(11) **EP 0 908 989 A2**
(43) Veröffentlichungstag der Anmeldung: **14.04.1999**
(21) Anmeldenummer: 98119018.4
(22) Anmeldetag: 08.10.1998
(51) Int. Cl.: H02G 1/00

(54) **Rechteckförmige Anreissschablone für Elektroinstallationen**

(30) Priorität: 09.10.1997 DE 29717951 U
(71) Anmelder: Dreschers, Rudolf, 52134 Herzogenrath (DE)
(72) Erfinder: Dreschers, Rudolf, 52134 Herzogenrath (DE)
(74) Vertreter: König, Werner, Dipl.-Ing.

(57) **Zusammenfassung**

Bekannte Schablonen haben den gemeinsamen Nachteil, daß sie auf Markierungen von Schalterdosen und/oder Steckdosen in üblicher Höhe begrenzt sind. Markierungen für Kücheninstallationen sind mit ihnen nicht möglich. Kücheninstallationen nehmen mittlerweile jedoch den größten Anteil an Installationsarbeiten überhaupt ein.

Vorgeschlagen wird, daß die Anreißschablone drei mindestens einen Durchbruch aufweisende, im Normabstand von Elektroinstallationsdosen übereinanderliegende Reihen von Durchbrüchen (1) hat, deren mittlere Reihe zur unteren Kante (2) der Anreißschablone einen Mittenabstand (a) entsprechend der empfohlenen Schalterdosenhöhe und deren untere Reihe zur oberen Kante (3) der Anreißschablone einen Mittenabstand (c) hat, der dem empfohlenen Abstand zwischen Decke und Steckdosen von Oberschrank-Installationen für Küchenmöbel mit normaler Oberschrankhöhe entspricht, und daß sie mindestens einen Durchbruch (5, 6) der zu einem der vorgenannten Durchbrüche, zur oberen (3) oder unteren Kante (2) der Anreißschablone oder zu mindestens einer weiteren Reihe von Durchbrüchen (4), die zur unteren Kante (2) der Anreißschablone einen Mittenabstand (d) entsprechend der empfohlenen Steckdosenhöhe aufweist, einen Mittenabstand (e, f) in Höhe des üblichen Breitenrasters von Küchenmöbeln hat.

Mit der Anreißschablone steht sowohl dem Installateur als auch dem fachkundigen Heimwerker ein einfaches, äußerst preiswertes und universelles Gerät zur Verfügung, mit dem nahezu alle empfohlenen Normhöhen bzw. -Abstände von Elektroinstallationsdosen ohne Verwendung von Meßmitteln markiert werden können.

## Beschreibung

Die Erfindung betrifft eine rechteckförmige Anreißschablone für Elektroinstallationen, die mit einer Anzhal schlitzförmiger Durchbrüche zum Markieren von Steck- und Schalterdosen versehen ist.

Schablonen für Elektroinstallationen sind hinreichend bekannt.

So zeigt das DE-GM 93 16 820.9 z.B. eine Schablone für das Fräsen von Schalterdosen. Das Fräsen erfolgt ohne Zentrierbohrer mitttels einer Außenbüchsenführung (Stahlbüchsen) in der Schablone. Die Schalterdosenhöhe soll durch verstellbare Füße an die Höhe eines noch aufzubringenden Estrichs einzustellen sein.

Die Schablone ist einmal durch die Stahlbüchsen teuer in der Herstellung, zum anderen muß eine Befestigungsmöglichkeit für die Schablone vorhanden da der Installateur nicht gleichzeitig die Schablone halten und dabei fräsen kann.

Die DE-OS 195 03 408 zeigt eine Schablone mit Löchern für die Mittelpunktmarkierung von Elektroinstallationsdosen. Die Schablone soll insgesamt nur 30cm lang sein, so daß stets ein Meßstab, z.B. ein Gliedermeßstab, mit zur Hilfe genommen werden muß. Muß gleichzeitig ein Höhen- und ein Abstandsmaß eingehalten werden, was für die meisten Installationen der Fall ist, so erweist sich diese Schablone bei der praktischen Handhabung als völlig ungeeignet.

Im DE-GM 94 11 054.9 wird eine Schablone angegeben, die für Elektroinstallationen in Neubauten im Rohzustand gedacht ist. Die Dosenhöhe muß über eine zusätzliche Nivelliereinrichtung festgestellt werden. Damit sollen Niveauunterschiede im Rohbaufußboden ausgeglichen werden. Solche Niveauunterschiede sind in aller Regel gering, so daß die Installateure eine derart aufwendige Maßnahme ohnehin nicht realisieren und dann eher zum herkömmlichen Abmessen mittels Gliedermeßstab greifen.

Eine relativ einfach handzuhabende Schablone ist in der DE-OS 195 23 994 beschrieben. Die Schablone sieht in einer Reihe übereinanderliegende kreuzförmige Durchbrüche vor, wobei der Installationsabstand zum Boden und zu einer Türleibung durch mechanisch verstellbare Anschläge hergestellt werden soll. Die Schablone ist durch ihre mechanischen Teile für die Produktion großer Serien immer noch ungeeignet. Außerdem ist sie für die praktische Anwendung noch nicht vielseitig genug. So erlaubt sie nicht das Markieren von Mehrfachdosen nebeneinander.

Allen vorgenannten bekannten Schablonen haben darüber hinaus den gemeinsamen Nachteil, daß sie auf Markierungen von Schalterdosen und/oder Steckdosen in üblicher Höhe begrenzt sind. Markierungen für Kücheninstallationen sind mit ihnen nicht möglich. Kücheninstallationen nehmen mittlerweile jedoch den größten Anteil an Installationsarbeiten überhaupt ein.

Die Erfindung hat sich die Aufgabe gestellt, eine einfache, preiswert zu fertigende, leicht zu handhabende und universelle Schablone für Elektroinstallationen anzugeben.

Erfindungsgemäß wird die Aufgabe dadurch gelöst, daß die Anreißschablone drei mindestens einen Durchbruch aufweisende, im Normabstand (71 mm) von Elektroinstallationsdosen übereinanderliegende Reihen von Durchbrüchen hat, deren mittlere Reihe zur unteren Kante der Anreißschablone einen Mittenabstand entsprechend der empfohlenen Schalterdosenhöhe und deren untere Reihe zur oberen Kante der Anreißschablone einen Mittenabstand hat, der dem empfohlenen Abstand zwischen Decke und Steckdosen von Oberschrank-Installationen für Küchenmöbel mit normaler Oberschrankhöhe entspricht, und daß sie mindestens einen Durchbruch hat, der zu einem der vorgenannten Durchbrüche, zur oberen oder unteren Kante der Anreißschablone oder zu mindestens einer weiteren Reihe von Durchbrüchen, die zur unteren Kante der Anreißschablone einen Mittenabstand entsprechend der empfohlenen Steckdosenhöhe aufweist, einen Mittenabstand in Höhe des üblichen Breitenrasters von Küchenmöbeln hat.

Soweit hier von Normabständen oder von empfohlenen Abständen die Rede ist, sind die Maße der einschlägigen DIN-Normen gemeint.

Vorzugsweise weist die Reihe der Durchbrüche in Steckdosenhöhe drei Durchbrüche im Normabstand von Elektroinstallationsdosen auf. Somit lassen sich auch waagerecht angeordnete Mehrfachdosen in einem Arbeitsgang markieren.

In ähnlicher Weise sollten die drei übereinanderliegenden Reihen von Durchbrüchen jeweils drei Durchbrüche im Normabstand von Elektroinstallationsdosen aufweisen.

Die Schablone wird zum Markieren von Schalterdosen einfach auf den Boden aufgesetzt. Das Maß der mittleren der drei übereinanderliegenden Reihen von Durchbrüchen zur unteren Kante der Schablone entspricht dabei vorzugsweise der üblichen Rohbau-Schalterhöhe von 1150mm. Soll die Schablone nur für Installationen in Altbauten oder Fertigbauten vorgesehen so könnte das Maß auch dem Maß der Schalterhöhe von fertigen Bauten entsprechen. Sind mehrere Schalter übereinander anzubringen oder zusätzlich zu einem Schalter eine Steckdose, so stellen die übereinanderliegenden Reihen der Durchbrüche den richtigen Abstand so daß mehrere Markierungen in einem Zuge vorgenommen werden können.

Gleichermaßen wird beim Markieren von Steckdosen in der üblichen Steckdosenhöhe vorgegangen.

Gegebenenfalls kann für Fertigbaumaße eine zweite Reihe der Markierungen in Steckdosenhöhe vorgesehen sein.

Es kann auch vorgesehen sein, daß das für die Estrichhöhe zugegebene Maß an der unteren Kante der Schablone entfernbar ist, indem eine Markierung in dieser Höhe angebracht an der die Schablone abgeschnitten oder umgeknickt werden kann. Besteht die Schablone aus Kunststoff so kann sich an dieser Stelle ein 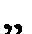 Kunststoffscharnier" befinden.

Für Installationen von Steckdosen über den Oberschränken von Küchenmöbeln, z.B. für Luftfilterhauben, Einbaukühlschränke und ähnliches, wird die Schablone an der Küchendecke angelegt. Die untere der drei übereinanderliegenden Reihen der Durchbrüche entspricht dann der empfohlenen Doserhöhe, wenn es sich um normalmaßige Oberschränke handelt. Für Küchenmöbel mit hohen Oberschränken wird die obere der drei Reihen benutzt.

Zweckmäßig werden die erfindungsgemäß weiterhin vorgesehenen Durchbrüche im Breitenraster von Küchenmöbeln, d.h. im Abstand von 50cm und 60cm, auf die Markierungen in Steckdosenhöhe bezogen. Damit nimmt der obere der beiden Durchbrüche gleichzeitig die Höhe des Schalter-Fertigbaumaßes ein. In waagerechter Haltung der Schablone können mit diesen beiden Durchbrüchen je nach Rastermaß der Küchenmöbel von einem Bezugspunkt, z.B. einer ersten Dose, Markierungen im Rastermaß angebracht werden. Hilfreich kann hierbei sein, die Schablone an oder in Nähe ihrer unteren und oberen Kante mittig mit jeweils einem Loch, einer Kerbe oder einem Schlitz zur Anlage an Wandmarkietungen zu versehen. Die Schablone kann dann z.B. aufeinen vorher auf die Wand aufgebrachten Schnurschlag ausgerichtet werden.

Für die Markierung von Installationen im Fliesenspiegel von Küchenmöbeln sind je nach Normhöhe der Arbeitsplatte (86cm oder 92cm) die mittlere und die obere Reihe der drei übereinanderliegenden Durchbruchreihen geeignet.

Die Schablone hat zweckmäßig eine solche Breite, daß der Mittenabstand der mittleren Durchbrüche, soweit mehrere Durchbrüche in einer Reihe nebeneinander angeordnet sind, von den Längskanten der Anreißschablone dem empfohlenen Abstand von Elektroinstallationsdosen zu einer Türkante entspricht.

Für die Schalterdoseninstallation in Türnähe wird die Schablone einfach an der Türleibung angelegt. Da sie eine genügende Länge aufweist, besteht auch nicht die Gefahr einer schiefen Anlage an noch groben Baukanten, weil bei dieser Länge eine Abweichung von der Senkrechten bereits optisch auffallen würde. Auf integrierte Wasserwaagen kann somit ebenso verzichtet werden wie aufmechanisch bewegte Teile.

Für eine bequeme Handhabung ist die Schablone zweckmäßig mit einem Griff versehen.

Damit steht dem Installateur ein einfades, äußerst preiswertes und universelles Gerät zur Verfügung, mit dem nahezu alle empfohlenen Normhöhen bzw. -Abstände von Elektroinstallationsdosen ohne Verwendung von Meßmitteln markiert werden können.

Die Markierung kann mit üblichen Farb- oder Kreidestiften erfolgen. Es kam auch eine Markierung mittels wasserlöslicher Farben erfolgen, die durch einen Pumpsprüher aufgebracht werden.

Die Schablone kann aus einem gestanzten Leichtmetallblech oder aus Kunststoff, notfalls auch aus Pappe gefertigt werden. Die Verwendungsmöglichkeit der einzelnen schlitzförmigen Durchbrüche kann zusätzlich durch einen entsprechenden Aufdruck erklärt sein.

Preis, Einfachheit und Eindeutigkeit der Handhabung lassen die Schablone nicht nur für den Installateur, sondern auch für den Laien, der gelegentlich Installationsarbeiten als Heimwerker selbst ausführt, interessant erscheinen, so daß sie auch in Baustoffmärkten angeboten werden kann.

Die Erfindung soll nachstehend anhand eines Ausführungsbeispiels näher erläutert werden. In der zugehörigen Zeichnung zeigen
- Fig. 1: eine Draufsicht aufeine Schablone gemaß der Erfindung und
- Fig. 2: eine Seitenansicht.

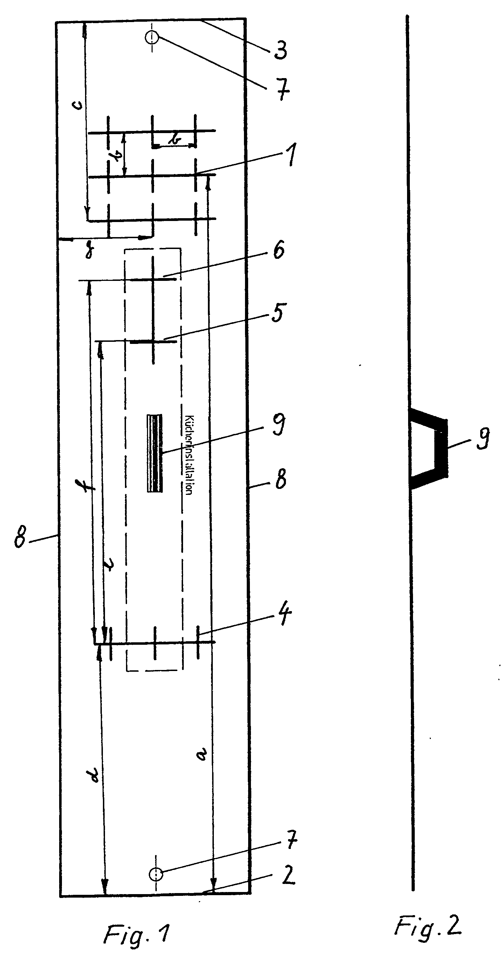

Die erfindungsgemäße Schablone, wie sie Fig. 1 zeigt, weist im oberen Bereich drei Reihen von jeweils drei schlitzförmigen Durchbrüchen 1 auf. Die mittlere Reihe hat zur unteren Kante 2 der Schablone einen Mittenabstand a, der der empfohlenen Rohbau-Schalterhöhe von 1150mm entspricht. Untereinander haben alle Durchbrüche 1 sowohl in horizontaler als auch in vertikaler Richtung einen Normabstand b von 71mm.

Die untere der drei Reihen hat zur oberen Kante 3 der Schablone einen Mittenabstand c, der dem empfohlenen Abstand Decke-Steckdose für die Oberschränke normaler Küchenmöbel entspricht (260mm). Die obere Reihe kann zum Markieren von Installationen über hohen Oberschränken von Küchenmöbeln dienen, wie sie seit einiger Zeit üblich sind (rund 120mm).

Die untere und obere Reihe sind gleichzeitig ein Maß für die Steckdosenhöhe im Fliesenspiegel von Küchenmöbeln bei entweder 86cm oder 92cm Arbeitsplattenhöhe.

Weitere drei Durchbrüche 4 sind im Rohbaumaß der Steckdosenhöhe d (400mm) angebracht.

Von der Reihe dieser Durchbrüche 4 ausgehend sind im Rastermaß c und f von 500 bzw. 600mm zwei weitere Durchbrüche 5 und 6 vorgesehen. Bei waagerechter Benutzung der Schablone können aufdiese Weise Markierungen im Küchen-Rastermaß vorgenommen werden, indem von einem Fixpunkt ausgehend das Rastermaß, ggf. mehrfach, übertragen wird. Um dabei auf einem Niveau zu bleiben, empfiehlt es sich, vorher einen Schnurschlag anzubringen und die Schablone mittels der Löcher 7 an diesem Schnurschlag auszurichten.

Die mittleren Durchbrüche haben zu den Längskanten 8 der Schablone einen Abstand g, der dem empfohlenen Maß für den Abstand von Elektroinstallationsdosen von Türleibungen (150mm) entspricht.

Zusätzlich kann die Schablone an einem Längsrand noch mit einer eingeprägten oder aufgedruckten Maßeinteilung versehen sein.

Zum Halten der Schablone ist ein Griff 9 vorgehesen, wie auch aus der Seitenansicht in Fig. 2 noch einmal deutlich wird.

## Patentansprüche

1. Rechteckförmige Anreißschablone für Elektroinstallationen, die mit einer Anzahl schlitzsförmiger Durchbrüche zum Markieren von Steck- und Schalterdosen versehen ist,
**dadurch gekennzeichnet,**
daß sie drei mindestens einen Durchbruch aufweisende, im Normabstand von Elektroinstallationsdosen übereinanderliegende Reihen von Durchbrüchen (1) hat, deren mittlere Reihe zur unteren Kante (2) der Anreißschablone einen Mittenabstand (a) entsprechend der empfohlenen Schalterdosenhöhe und deren untere Reihe zur oberen Kante (3) der Anreißschablone einen Mittenabstand (c) hat, der dem empfohlenen Abstand zwischen Decke und Steckdosen von Oberschrank-Installationen für Küchenmöbel mit normaler Oberschrankhöhe entspricht,
und daß sie mindestens einen Durchbruch (5, 6) hat, der zu einem der vorgenannten Durchbrüche, zur oberen (3) oder unteren Kante (2) der Anreißschablone oder zu mindestens einer weiteren Reihe von Durchbrüchen (4), die zur unteren Kante (2) der Anreißschablone einen Mittenabstand (d) entsprechend der empfohlenen Steckdosenhöhe aufweist, einen Mittenabstand (e, f) in Höhe des üblichen Breitenrasters von Küchenmöbeln hat.

2. Anreißschablone nach Anspruch 1, dadurch gekennzeichnet, daß die Reihe der Durchbrüche (4) in Steckdosenhöhe drei Durchbrüche im Normabstand von Elektroinstallationsdosen aufweist.

3. Anreißschablone nach Anspruch 1 oder 2, dadurch gekennzeichnet, daß die drei übereinanderliegenden Reihen von Durchbrüchen (1) jeweils drei Durchbrüche im Normabstand von Elektroinstallationsdosen aufweisen.

4. Anreißschablone nach einem der vorhergehenden Ansprüche, dadurch gekennzeichnet, daß der Mittenabstand der mittleren Durchbrüche, soweit mehrere Durchbrüche in einer Reihe nebeneinander angeordnet sind, von den Längskanten (8) der Anreißschablone dem empfohlenen Abstand von Elektroinstallationsdosen zu einer Türkante entspricht.

5. Anreißschablone nach einem der vorhergehenden Ansprüche, dadurch gekennzeichnet, daß sie an oder in Nähe ihrer unteren (2) und oberen Kante (3) mittig mit jeweils einem Loch (7), einer Kerbe oder einem Schlitz zur Anlage an Wandmarkierungen versehen ist.

6. Anreißschablone nach einem der vorhergehenden Ansprüche, dadurch gekennzeichnet, daß sie mit einem Griff (9) versehen ist.
